# EUROPEAN PATENT APPLICATION

(11) **EP 4 378 993 A1**
(43) Date of publication of application: **05.06.2024**
(21) Application number: 22869874.2
(22) Date of filing: 07.09.2022
(51) Int. Cl.: C08L 11/00, C08L 63/00, C08K 3/013

(54) **RUBBER COMPOSITION, VULCANIZATE, AND VULCANIZED MOLDED OBJECT**

(30) Priority: 14.09.2021 JP 2021149443
(71) Applicant: Denka Company Limited, Tokyo 103-8338 (JP)
(72) Inventor: TOMIZAWA, Seiya, Tokyo 103-8338 (JP); KONDO, Atsunori, Tokyo 103-8338 (JP)
(74) Representative: Gulde & Partner
(86) International application number: PCT/JP2022/033588
(87) International publication number: WO 2023/042727

(57) **Abstract**

Provided is a rubber composition capable of improving the scorch time of the unvulcanized product, and the hardness, tensile strength, and freeze resistance of the vulcanizate in a well-balanced manner.

According to the present invention, there is provided a rubber composition including a chloroprene-based rubber having a content of an unsaturated nitrile monomer unit of less than 25% by mass and an epoxy compound having a weight average molecular weight more than 100 and less than 900, wherein the rubber composition contains 0.1 to 25 parts by mass of the epoxy compound with respect to 100 parts by mass of the chloroprene-based rubber.

## Description

### Technical Field

The present invention relates to a rubber composition, a vulcanizate, and a vulcanized molded object, etc.

### Background Art

Chloroprene rubber has excellent properties and is used in a wide range of fields such as automobile parts, adhesives, and various industrial rubber parts by taking advantage of these properties. Rubber compositions described in Patent Literatures 1 to 3 below are known as techniques in which chloroprene rubber can be used.

### Citation List

### Patent Literature

Patent Literature 1: JP-A-2016-23191
Patent Literature 2: JP-A-2012-111899
Patent Literature 3: JP-A-H9-268239

### Summary of Invention

### Technical Problem

Rubber compositions containing chloroprene rubber may be required to simultaneously have various properties at a high level in a vulcanized molded object of the rubber composition, but it is difficult to obtain a rubber composition capable of improving the scorch time of the unvulcanized product, and the hardness, tensile strength, and freeze resistance of the vulcanizate in a well-balanced manner.

The present invention has been made in view of these circumstances, and an object thereof is to provide a rubber composition capable of improving the scorch time of the unvulcanized product, and the hardness, tensile strength, and freeze resistance of the vulcanizate in a well-balanced manner.

### Solution to Problem

According to the present invention, there is provided a rubber composition comprising a chloroprene-based rubber having a content of an unsaturated nitrile monomer unit of less than 25% by mass and an epoxy compound having a weight average molecular weight more than 100 and less than 900, wherein the rubber composition comprises 0.1 to 25 parts by mass of the epoxy compound with respect to 100 parts by mass of the chloroprene-based rubber composition.

According to another aspect of the present invention, a vulcanizate of the rubber composition described above is provided.

In addition, according to another aspect of the present invention, a vulcanized molded object using the vulcanizate described above is provided.

The present inventors have made intensive studies and found that by including a specific type of chloroprene-based rubber and an epoxy compound with a specific molecular weight, and by specifying the compounding amount of the epoxy compound, a rubber composition capable of improving the scorch time of the unvulcanized product, and the hardness, tensile strength, and freeze resistance of the vulcanizate in a well-balanced manner can be obtained, and the present invention is completed.

Various embodiments of the present invention are illustrated below. The embodiments shown below can be combined with each other.
[1] A rubber composition comprising a chloroprene-based rubber having a content of an unsaturated nitrile monomer unit of less than 25% by mass and an epoxy compound having a weight average molecular weight more than 100 and less than 900, wherein
   the rubber composition comprises 0.1 to 25 parts by mass of the epoxy compound with respect to 100 parts by mass of the chloroprene-based rubber composition.
[2] The rubber composition of [1], wherein
   the unsaturated nitrile monomer is acrylonitrile.
[3] The rubber composition of [1] or [2], wherein
   the epoxy compound is at least one epoxy compound selected from an alicyclic epoxy compound, an epoxy resin comprising a copolymer of epichlorohydrin and bisphenol, and an epoxidized unsaturated fatty acid ester.
[4] The rubber composition of any one of [1] to [3], wherein
   the rubber composition comprises 20 to 80 parts by mass of a filler with respect to 100 parts by mass of the chloroprene-based rubber.
[5] The rubber composition of any one of [1] to [4], wherein
   the rubber composition comprises 5 parts by mass or more of a curing agent with respect to 100 parts by mass of the epoxy compound.
[6] The rubber composition of any one of [1] to [5], wherein
   a vulcanizate, obtained by molding the rubber composition in accordance with JIS K6299, has a Type A durometer hardness of 80 or more as measured in accordance with JIS K6253.
[7] A vulcanizate of the rubber composition of any one of [1] to [6].
[8] A vulcanized molded object using the vulcanizate of [7].

### Effects of Invention

The rubber composition according to the present invention can obtain a vulcanizate and a vulcanized molded object having sufficient scorch time and excellent hardness, tensile strength, and freeze resistance. Furthermore, the obtained vulcanizate and vulcanized molded object have sufficient scorch time and are therefore excellent in processability and storage stability. In addition, the obtained vulcanizate and vulcanized molded object have not only the excellent mechanical strength, weather resistance, chemical resistance, and heat resistance of chloroprene-based rubber, but also have improved hardness, tensile strength, and freeze resistance, and thus can be used as various members that require these characteristics. Examples include rubber parts such as rubber members for automobiles (for example, automobile sealing materials), hose materials, rubber molds, gaskets, rubber rolls, industrial cables, industrial conveyor belts, sponges.

### Description of Embodiments

Hereinafter, the present invention will be described in detail by exemplifying embodiments of the present invention. The present invention is not limited by these descriptions. Various features of embodiments of the present invention described below can be combined with each other. In addition, the invention is established independently for each feature.

### 1. Rubber composition

The rubber composition according to the present invention contains a chloroprene-based rubber having a content of an unsaturated nitrile monomer unit of less than 25% by mass and an epoxy compound having a weight average molecular weight more than 100 and less than 900, and contains 0.1 to 25 parts by mass of the epoxy compound with respect to 100 parts by mass of the chloroprene-based rubber.

According to the present invention, by including a specific type of chloroprene-based rubber and an epoxy compound with a specific molecular weight, and by specifying the compounding amount of the epoxy compound, the scorch time of the unvulcanized product, and the hardness, tensile strength, and freeze resistance of the vulcanizate can be improved in a well-balanced manner.

### 1.1 Chloroprene-Based Rubber

The chloroprene-based rubber according to the present invention refers to a rubber containing a chloroprene-based polymer having chloroprene (2-chloro-1,3-butadiene) as a monomer unit (chloroprene monomer unit. Here monomer unit means structural unit). Examples of the chloroprene-based polymer include homopolymers of chloroprene, copolymers of chloroprene (copolymers of chloroprene and monomers copolymerizable with chloroprene), and the like. The polymer structure of the chloroprene-based polymer is not particularly limited.

Note that commercially available 2-chloro-1,3-butadiene may contain a small amount of 1-chloro-1,3-butadiene as an impurity. Such 2-chloro-1,3-butadiene containing a small amount of 1-chloro-1,3-butadiene can also be used as the chloroprene monomer of this embodiment.

The chloroprene-based rubber according to one embodiment of the present invention includes a rubber that is a chloroprene-based rubber in which the content of the unsaturated nitrile monomer unit is less than 25% by mass.

In the chloroprene-based rubber according to one embodiment of the present invention, the content of the unsaturated nitrile monomer unit is less than 25% by mass when the rubber is 100% by mass, and the content of the unsaturated nitrile monomer unit is preferably 1% by mass or more and less than 25% by mass.

The content of the unsaturated nitrile monomer unit in the chloroprene-based rubber according to one embodiment of the present invention is, for example, 0, 1, 2, 3, 4, 5, 6, 7, 8, 9, 10, 11, 12, 13, 14, 15, 16, 17, 18, 19, 20, 21, 22, 23, 24% by mass, and is less than 25% by mass, and may be within the range between any two of the numerical values exemplified here. By setting the content of the unsaturated nitrile monomer unit to less than 25% by mass, the resulting rubber composition will have sufficient freeze resistance. In addition, especially by setting the content of the unsaturated nitrile monomer unit to 1% by mass or more, the resulting rubber composition will have sufficient oil resistance, and can obtain a vulcanized molded object having an excellent balance among hardness, tensile strength, and freeze resistance.

Examples of the unsaturated nitrile include acrylonitrile, methacrylonitrile, ethacrylonitrile, phenyl acrylonitrile, and the like. The unsaturated nitrile can be used alone or in combination of two or more types. The unsaturated nitrile preferably includes acrylonitrile from the viewpoint of easily obtaining excellent moldability and from the viewpoint of easily obtaining excellent breaking strength, breaking elongation, hardness, tear strength, and oil resistance in a vulcanized molded object.

The content of the unsaturated nitrile monomer unit contained in the chloroprene-based rubber can be calculated from the content of nitrogen atoms in the chloroprene-based rubber. Specifically, the content of nitrogen atoms in 100 mg of chloroprene-based rubber can be measured using an elemental analyzer (Sumigraph 220F, manufactured by Sumika Chemical Analysis Service, Ltd.) to calculate the content of the structural unit derived from the unsaturated nitrile monomer. Elemental analysis measurements can be performed under the following conditions. For example, the electric furnace temperature is set to 900°C for the reaction furnace and 600°C for the reduction furnace, the column temperature is set to 70°C, and the detector temperature is set to 100°C, oxygen is flowed at 0.2 mL/min as a combustion gas and helium is flowed at 80 mL/min as a carrier gas. A calibration curve can be created using aspartic acid (10.52%), which has a known nitrogen content, as a reference material.

The chloroprene-based rubber according to one embodiment of the present invention preferably contains 60 to 100% by mass of chloroprene monomer unit, when the rubber is 100% by mass. The content of the chloroprene monomer unit in the chloroprene-based rubber is, for example, 60, 65, 70, 75, 80, 85, 90, 95, 99, 100% by mass, and may be within the range between any two of the numerical values exemplified here. By setting the content of the chloroprene monomer unit within the above numerical range, a rubber composition capable of giving a molded object having an excellent balance among hardness, tensile strength, and freeze resistance can be obtained.

The chloroprene-based rubber according to one embodiment of the present invention may also have monomer units other than chloroprene monomer and unsaturated nitrile monomer. The monomer units other than chloroprene monomer and unsaturated nitrile monomer are not particularly limited as long as they can be copolymerized with chloroprene monomer or with chloroprene monomer and unsaturated nitrile monomer, and examples thereof include esters of (meth)acrylic acid (methyl (meth)acrylate, butyl (meth)acrylate, 2-ethylhexyl (meth)acrylate, etc.), hydroxyalkyl (meth)acrylate (2-hydroxymethyl (meth)acrylate, 2-hydroxyethyl (meth)acrylate, 2-hydroxypropyl (meth)acrylate, etc.), 2,3-dichloro-1,3-butadiene, 1-chloro-1,3-butadiene, butadiene, isoprene, ethylene, styrene, sulfur, and the like.

The chloroprene-based rubber according to one embodiment of the present invention may contain 0 to 20% by mass of monomer units other than chloroprene monomer and unsaturated nitrile monomer, when the rubber is 100% by mass. The content of monomer units other than chloroprene monomer and unsaturated nitrile monomer in the chloroprene-based rubber is, for example, 0, 2, 4, 6, 8, 10, 12, 14, 16, 18, 20% by mass, and may be within the range between any two of the numerical values exemplified here. By adjusting the copolymerization amounts of monomers other than chloroprene monomer and unsaturated nitrile monomer within this range, the effect of copolymerizing these monomers can be exhibited without impairing the properties of the resulting rubber composition.

In addition, the chloroprene-based rubber according to one embodiment of the present invention may consist of only chloroprene monomer unit and unsaturated nitrile monomer unit, and may also consist of only chloroprene monomer unit.

In the rubber composition according to the present invention, the chloroprene-based rubber can be used alone or in combination of two or more types.

When the rubber composition according to one embodiment of the present invention contains two or more types of chloroprene-based rubber, the content of the unsaturated nitrile monomer unit contained in the two or more types of chloroprene-based rubber included in the rubber composition is preferably less than 25% by mass.

The chloroprene-based polymer (a homopolymer of chloroprene, a copolymer of chloroprene, etc.) contained in the chloroprene-based rubber according to the present invention may be a sulfur-modified chloroprene polymer, a mercaptan-modified chloroprene polymer, a xanthogen-modified chloroprene polymer, a dithiocarbonate-based chloroprene polymer, a trithiocarbonate-based chloroprene polymer, a carbamate-based chloroprene polymer, or the like.

The weight average molecular weight (Mw), number average molecular weight (Mn), and molecular weight distribution (molecular weight polydispersity, Mw/Mn) of the chloroprene-based rubber may be within the following ranges, from the viewpoint of easily obtaining good balance among excellent hardness, tensile strength, and freeze resistance.

The weight average molecular weight of the chloroprene-based rubber may be 10× 10³ g/mol or more, 50×10³ g/mol or more, 100× 10³ g/mol or more, 300× 10³ g/mol or more, 400× 10³ g/mol or more, or 450× 10³ g/mol or more. The weight average molecular weight of the chloroprene-based rubber may be 5000×10³ g/mol or less, 3000× 10³ g/mol or less, 2000× 10³ g/mol or less, 1000×10³ g/mol or less, 800×10³ g/mol or less, or 500×10³ g/mol or less. From these viewpoints, the weight average molecular weight of the chloroprene-based rubber may be 10×10³ to 5000×10³ g/mol, 100× 10³ to 2000× 10³ g/mol, or 300× 10³ to 1000× 10³ g/mol.

The number average molecular weight of the chloroprene-based rubber may be 1×10³ g/mol or more, 5×10³ g/mol or more, 10×10³ g/mol or more, 50×10³ g/mol or more, 100×10³ g/mol or more, or 130×10³ g/mol or more. The number average molecular weight of the chloroprene-based rubber may be 1000× 10³ g/mol or less, 800×10³ g/mol or less, 500×10³ g/mol or less, 300×10³ g/mol or less, 200×10³ g/mol or less, or 150×10³ g/mol or less. From these viewpoints, the number average molecular weight of the chloroprene-based rubber may be 1× 10³ to 1000× 10³ g/mol, 10× 10³ to 500×10³ g/mol, or 50× 10³ to 300× 10³ g/mol.

The molecular weight distribution of the chloroprene-based rubber may be 1.0 or more, 1.5 or more, 2.0 or more, 2.5 or more, 3.0 or more, 3.2 or more, or 3.4 or more. The molecular weight distribution of the chloroprene-based rubber may be 10 or less, 8.0 or less, 5.0 or less, 4.0 or less, 3.8 or less, 3.5 or less, or 3.4 or less. From these viewpoints, the molecular weight distribution of the chloroprene-based rubber may be 1.0 to 10, 2.0 to 5.0, or 2.5 to 4.0.

The weight average molecular weight (Mw) and number average molecular weight (Mn) of the chloroprene-based rubber can be obtained by measuring with gel permeation chromatography (GPC) and converting in terms of polystyrene, and specifically, can be measured by the methods described in Examples.

### 1.2 Method for producing chloroprene-based rubber

The method for producing the chloroprene-based rubber according to the present invention is not particularly limited, and can be obtained by a production method including an emulsion polymerization step of emulsion polymerizing raw material monomers containing chloroprene monomer.

In the emulsion polymerization step according to one embodiment of the present invention, a latex containing the chloroprene-based polymer including chloroprene monomer unit can be obtained by emulsion polymerizing chloroprene monomer, or monomers including chloroprene monomer and unsaturated nitrile monomer using an emulsifier, a dispersant, a catalyst, a chain transfer agent and the like appropriately, and adding a polymerization terminator when the desired final conversion rate is reached.

Next, unreacted monomers can be removed from the polymerization solution obtained by the emulsion polymerization step. The method is not particularly limited, and includes, for example, a steam stripping method.

Thereafter, pH is adjusted, and a chloroprene-based rubber containing the chloroprene-based polymer can be obtained by going through conventional processes such as freezing and coagulation, washing with water, and drying with hot air.

The polymerization initiator used for emulsion polymerization is not particularly limited, and known polymerization initiators commonly used for emulsion polymerization of chloroprene can be used. Examples of the polymerization initiator include organic peroxides such as potassium persulfate, ammonium persulfate, sodium persulfate, hydrogen peroxide, and t-butyl hydroperoxide.

The emulsifier used in emulsion polymerization is not particularly limited, and known emulsifiers commonly used in emulsion polymerization of chloroprene can be used. Examples of the emulsifier include alkali metal salts of saturated or unsaturated fatty acids having 6 to 22 carbon atoms, alkali metal salts of rosin acids or disproportionated rosin acids (e.g. potassium rosinate), alkali metal salts of formalin condensate of β-naphthalenesulfonic acid (e.g. sodium salts).

The molecular weight regulator used in emulsion polymerization is not particularly limited, and known molecular weight regulators commonly used in emulsion polymerization of chloroprene can be used, such as mercaptan-based compounds, xanthogen-based compounds, dithiocarbonate-based compounds, trithiocarbonate-based compounds, and carbamate-based compounds. As the molecular weight regulator for the chloroprene-based rubber according to one embodiment of the present invention, xanthogen-based compounds, dithiocarbonate-based compounds, trithiocarbonate-based compounds, and carbamate-based compounds can be suitably used.

The polymerization temperature and the final conversion rate of monomers are not particularly limited, and the polymerization temperature may be, for example, 0 to 50°C or 10 to 50°C. The polymerization may be carried out such that the final conversion rate of monomers is in the range of 40 to 95% by mass. In order to adjust the final conversion rate, when the desired conversion rate is reached, a polymerization terminator that stops the polymerization reaction may be added to terminate the polymerization.

The polymerization terminator is not particularly limited, and know polymerization terminators commonly used in emulsion polymerization of chloroprene can be used. Examples of the polymerization terminator include phenothiazine (thiodiphenylamine), 4-t-butylcatechol, 2,2-methylenebis-4-methyl-6-t-butylphenol, and the like.

The chloroprene-based rubber according to one embodiment of the present invention can be obtained by, for example, removing unreacted monomers using a steam stripping method, adjusting the pH of the latex, and going through conventional processes such as freezing and coagulation, washing with water, and drying with hot air.

Chloroprene-based rubber is classified into mercaptan-modified type, xanthogen-modified type, sulfur-modified type, dithiocarbonate-based type, trithiocarbonate-based type, and carbamate-based type depending on the type of molecular weight regulator.

### 1.3 Epoxy compound

The rubber composition according to the present invention contains an epoxy compound, that is, a compound having an epoxy group. The epoxy compound can have a function as a reactive plasticizer (curable plasticizer) which improves the fluidity of the unvulcanized product, and by curing during vulcanization, improves the mechanical properties such as hardness and tensile strength of the vulcanizate.

Examples of the epoxy compound include an alicyclic epoxy compound, an epoxy resins comprising a copolymer of epichlorohydrin and bisphenol, an epoxidized unsaturated fatty acid ester, and a diene polymer having an epoxy group (excluding compounds corresponding to the chloroprene-based polymer). The epoxy compound preferably contains one or more selected from the group consisting of an alicyclic epoxy compound, an epoxy resin comprising a copolymer of epichlorohydrin and bisphenol, and an epoxidized unsaturated fatty acid ester.

Examples of the alicyclic epoxy compound include compounds represented by the following formulas (1), (2), and (3).

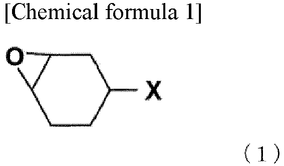

In formula (1), X can be any organic group, such as a hydrocarbon group having an optional substituent, examples thereof include an alkyl group and an alkenyl group having an optional substituent. In addition, the hydrocarbon group can include a carbonyl group, an ether group (ether bond), an epoxy group, and a group with multiple of these groups connected.

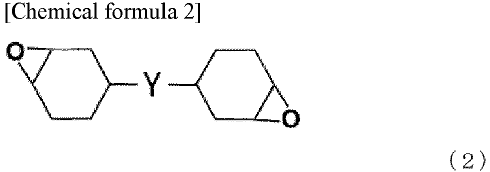

In formula (2), Y represents any single bond or connecting group (a divalent group having one or more atoms). Examples of the connecting group include a divalent hydrocarbon group (for example, an alkylene group), a carbonyl group, an ether group (ether bond), an epoxy group, and a group with multiple of these groups connected.

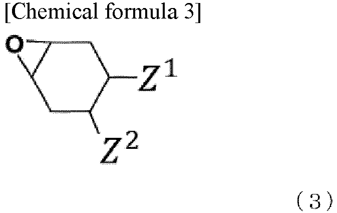

In formula (3), Z¹ and Z² can each independently be any organic group, such as a hydrocarbon group optionally having a substituent, examples thereof include an alkyl group and an alkenyl group optionally having a substituent. In addition, the hydrocarbon group can include a carbonyl group, an ether group (ether bond), an epoxy group, and a group with multiple of these groups connected.

Examples of the alicyclic epoxy compound include 3',4'-epoxycyclohexylmethyl 3,4-epoxycyclohexanecarboxylate, ε-caprolactone-modified 3',4'-epoxycyclohexylmethyl 3,4-epoxycyclohexanecarboxylate, 1-vinyl-3,4-epoxycyclohexane, di-2-ethylhexyl 4,5-epoxycyclohexane-1,2-dicarboxylate, di(9,10-epoxystearyl) 4,5-epoxycyclohexane-1,2-dicarboxylate, and the like.

The epoxy resin comprising a copolymer of epichlorohydrin and bisphenol is represented by formula (4).

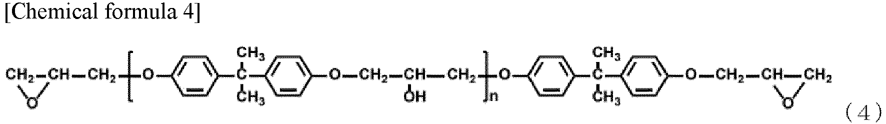

(In formula (4), n is an arbitrary integer satisfying the following molecular weight regulations.)

In formula (4), n preferably satisfies 0≦n≦2.

Examples of the epoxidized unsaturated fatty acid ester include epoxidized fatty acid isobutyl esters, and epoxidized fatty acid 2-ethylhexyl esters.

The diene polymer having an epoxy group is preferably liquid at room temperature (25°C).

Examples of the diene polymer having an epoxy group include aliphatic conjugated diene polymers such as polybutadiene and polyisoprene, aromatic vinyl-aliphatic conjugated diene copolymers such as styrene-butadiene polymer (SBR), vinyl cyanide-conjugated diene copolymers such as acrylonitrile-butadiene polymer (NBR), hydrogenated SBR, hydrogenated NBR having epoxy groups, and the like. The diene polymer having an epoxy group may include, for example, a compound represented by the following formula (5).

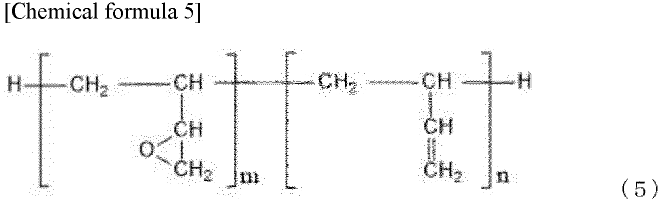

(In formula (5), m and n are arbitrary integers that satisfy the following molecular weight regulations.)

The epoxy compound according to the present invention has a weight average molecular weight of more than 100 and less than 900.

The weight average molecular weight of the epoxy compound according to the present invention is, for example, more than 100, equal to 110, 150, 200, 250, 300, 350, 400, 450, 500, 550, 600, 650, 700, 750, 800, 850, 890, or less than 900, and may be within the range between any two of the numerical values exemplified here.

By setting the molecular weight of the epoxy compound to be below the above upper limit, the scorch time of the unvulcanized product can be improved. In addition, by setting the molecular weight of the epoxy compound to exceed the above lower limit, the hardness, tensile strength, and freeze resistance of the vulcanizate can be improved in a well-balanced manner.

The weight average molecular weight can be obtained by measuring with gel permeation chromatography (GPC) and converting in terms of polystyrene, and can be measured by the same method as the weight average molecular weight of chloroprene polymer.

The epoxy equivalent of the epoxy compound can be 100 to 500 g/eq. The epoxy equivalent is, for example, 100, 150, 200, 250, 300, 350, 400, 450, 500 g/eq, and may be within the range between any two of the numerical values exemplified here.

The rubber composition according to the present invention contains 0.1 to 25 parts by mass of epoxy compound with respect to 100 parts by mass of chloroprene-based rubber. The content of the epoxy compound with respect to 100 parts by mass of chloroprene-based rubber is, for example, 0.1, 0.5, 1, 5, 10, 15, 20, 25 parts by mass, and may be within the range between any two of the numerical values exemplified here.

By setting the content of the epoxy compound within the above numerical range, a rubber composition capable of improving the scorch time of the unvulcanized product, and the hardness, tensile strength, and freeze resistance of the vulcanizate in a well-balanced manner can be obtained.

### 1.4 Curing agent

The rubber composition according to one embodiment of the present invention may include a curing agent. The curing agent is not particularly limited as long as it contributes to curing of the epoxy compound. Examples of the curing agent include carboxylic acid hydrazide-based curing agents, amine-based curing agents, phenol-based curing agents, and acid anhydride-based curing agents. These can be used alone or in combination of two or more types.

The curing agent according to one embodiment of the present invention preferably contains carboxylic acid hydrazide-based curing agents. The carboxylic acid hydrazide-based curing agent preferably contains any one selected from the group consisting of carboxylic acid hydrazide and carboxylic acid dihydrazide. Examples of the carboxylic acid hydrazide-based curing agent include salicylic acid hydrazide, oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, tetrahydrophthalic acid dihydrazide, phthalic acid dihydrazide, dodecanedioic acid dihydrazide, isophthalic acid dihydrazide, and the like. The curing agent according to one embodiment of the present invention more preferably contains carboxylic acid dihydrazide. The curing agent according to one embodiment of the present invention more preferably contains any one selected from the group consisting of isophthalic acid dihydrazide, sebacic acid dihydrazide, adipic acid dihydrazide, and dodecanedioic acid dihydrazide.

The rubber composition according to one embodiment of the present invention may contain 5 parts by mass or more of curing agent with respect to 100 parts by mass of epoxy compound. The amount of curing agent added with respect to 100 parts by mass of epoxy compound is, for example, 5, 10, 15, 20, 25, 30, 35, 40, 45, 50, 55, 60, 65, 70 parts by mass, and may be within the range between any two of the numerical values exemplified here. The rubber composition according to one embodiment of the present invention can further improve mechanical properties by containing a curing agent not less than the above lower limit, and can prevent shortening of the scorch time by containing a curing agent not more than the above upper limit. The rubber composition according to one embodiment of the present invention may not contain a curing agent.

When the curing agent according to one embodiment of the present invention is added in an amount of 5 parts by mass with respect to 100 parts by mass of epoxy compound, the gelation time at 160°C is preferably 60 minutes or less. The gelation time is, for example, 10, 15, 20, 25, 30, 35, 40, 45, 50, 55, 60 minutes, and may be within the range between any two of the numerical values exemplified here.

By selecting a curing agent having a gelation time within the above numerical range, it is possible to achieve both sufficiently long scorch time for the unvulcanized product and excellent mechanical properties for the vulcanizate.

### 1.5 Vulcanizing Agent

The rubber composition according to the present invention can contain a vulcanizing agent.

The type of vulcanizing agent is not particularly limited as long as it does not impair the effects of the present invention. The vulcanizing agent is preferably a vulcanizing agent that can be used for vulcanization of chloroprene-based rubber. One or more vulcanizing agents can be freely selected and used.

Examples of the vulcanizing agent include sulfur, metal oxides, and organic peroxides.

Examples of the metal oxide include zinc oxide, magnesium oxide, lead oxide, trilead tetroxide, iron trioxide, titanium dioxide, calcium oxide, and the like. The metal oxide preferably contains zinc oxide or magnesium oxide, and more preferably contains zinc oxide.

Examples of the organic peroxides include dicumyl peroxide, benzoyl peroxide, 1,1-bis(t-butylperoxy)-3,5,5-trimethylcyclohexane, diisobutyryl peroxide, cumyl peroxyneodecanoate, di-n-propyl peroxydicarbonate, diisopropyl peroxydicarbonate, di-sec-butyl peroxydicarbonate, 1,1,3,3-tetramethylbutyl peroxyneodecanoate, di(4-t-butylcyclohexyl) peroxydicarbonate, di(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutyl peroxy-2-ethylhexanoate, disuccinic peroxide, 2,5-dimethyl-2,5-di(2-ethylhexanoylperoxy)hexane, t-hexyl peroxy-2-ethylhexanoate, di(4-methylbenzoyl) peroxide, t-butyl peroxy-2-ethylhexanoate, di(3-methylbenzoyl) peroxide, benzoyl (3-methylbenzoyl) peroxide, dibenzoyl peroxide, 1,1-di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, 2,2-di(4,4-di-(t-butylperoxy)cyclohexyl)propane, t-hexyl peroxy isopropyl monocarbonate, t-butyl peroxymaleate, t-butyl peroxy-3,5,5-trimethylhexanoate, t-butyl peroxylaurate, t-butyl peroxy isopropyl monocarbonate, t-butyl peroxy 2-ethylhexyl monocarbonate, t-hexyl peroxybenzoate, 2,5-di-methyl-2,5-di(benzoylperoxy)hexane, t-butyl peroxyacetate, 2,2-di-(t-butylperoxy)butane, t-butyl peroxybenzoate, n-butyl 4,4-di-(t-butylperoxy)valerate, 1,4-bis[(t-butylperoxy)isopropyl]benzene, di-t-hexyl peroxide, 2,5-dimethyl-2,5-di(t-butylperoxy)hexane, t-butylcumyl peroxide, di-t-butyl peroxide, p-menthane hydroperoxide, 2,5-dimethyl-2,5-bis(t-butylperoxy)hexyne-3, diisopropylbenzene hydroperoxide, 1,1,3,3-tetramethylbutyl hydroperoxide, cumene hydroperoxide, and t-butyl hydroperoxide. Among these, at least one selected from dicumyl peroxide, 1,4-bis[(t-butylperoxy)isopropyl]benzene, t-butyl α-cumyl peroxide, 2,5-dimethyl-2,5-bis(t-butylperoxy)hexane, and 2,5-dimethyl-2,5-bis(t-butylperoxy)hexyne-3 is preferable, and 1,4-bis[(t-butylperoxy)isopropyl]benzene is particularly preferable.

From the viewpoint of ensuring processing safety and being able to obtain a good vulcanizate, the rubber composition according to the present invention preferably contains 3 to 15 parts by mass of vulcanizing agent, when rubber contained in the rubber composition is 100 parts by mass. When rubber contained in the rubber composition is 100 parts by mass, the content of the vulcanizing agent is, for example, 3, 4, 5, 6, 7, 8, 9, 10, 11, 12, 13, 14, 15 parts by mass, and may be within the range between any two of the numerical values exemplified here.

The rubber composition according to one embodiment of the present invention may contain a metal oxide and an organic peroxide. When an organic peroxide is used, the amount of organic peroxide added can be 0.3 to 1.8 parts by mass with respect to 100 parts by mass of chloroprene-based rubber. The amount of organic peroxide added can be, for example, 0.3, 0.4, 0.5, 0.6, 0.7, 0.8, 0.9, 1.0, 1.1, 1.2, 1.3, 1.4, 1.5, 1.6, 1.7, 1.8 parts by mass, and may be within the range between any two of the numerical values exemplified here.

### 1.6 Hydrotalcite

The rubber composition according to one embodiment of the present invention may contain a hydrotalcite.

As the hydrotalcite, those represented by the following formula (6) can be used.
[Chemical formula 6]

[M²⁺₁₋ₓM³⁺ₓ(OH)_{2]}^{x+}[A_{n-x/n}·mH₂O]^{x-} (6)

In the above formula (6),
M²⁺: at least one divalent metal ion selected from Mg²⁺, Zn²⁺, etc.
M³⁺: at least one trivalent metal ion selected from Al³⁺, Fe³⁺, etc.
Aⁿ⁻: at least one n-type anion selected from Co₃²⁻, Cl⁻, NO₃²⁻, etc.
X: can be 0<X≦0.33.

Examples of the hydrotalcite include Mg_{4.3}Al₂(OH)_{12.6}CO₃·3.5H₂O, Mg₃ZnAl₂(OH)₁₂CO₃·3H₂O, Mg_{4.5}Al₂(OH)₁₃CO₃·3.5H₂O, Mg_{4.5}Al₂(OH)₁₃CO₃, Mg₄Al₂(OH)₁₂CO₃·3.5H₂O, Mg₆Al₂(OH)₁₆CO₃-4H₂O, Mg₅Al₂(OH)₁₄CO₃-4H₂O, Mg₃Al₂(OH)₁₀CO₃·1.7H₂O, and the like, and particularly preferred are Mg_{4.3}Al₂(OH)_{12.6}CO₃·3.5H₂O, Mg₃ZnAl₂(OH)₁₂CO₃·3H₂O.

When using the hydrotalcite, the amount of the hydrotalcite added can be 1 to 10 parts by mass with respect to 100 parts by mass of chloroprene-based rubber. The amount of the hydrotalcite added is, for example, 1, 2, 3, 4, 5, 6, 7, 8, 9, 10 parts by mass, and may be within the range between any two of the numerical values exemplified here.

### 1.7 Plasticizer and Softening agent

The rubber composition according to the present invention may contain a plasticizer and/or softening agent. The plasticizer/softening agent is added to adjust the processability of the unvulcanized rubber composition and the flexibility of the vulcanizate and vulcanized molded object after vulcanization. The plasticizer and softening agent are not particularly limited as long as it is compatible with rubber. Examples of the plasticizer and softening agent include vegetable oils such as rapeseed oil, linseed oil, castor oil, and coconut oil, phthalate plasticizers, ester plasticizers such as DUP (diundecyl phthalate), DOP (dioctyl phthalate), DINP (diisononyl phthalate), DOTP (dioctyl terephthalate), DOS (dioctyl sebacate), DBS (dibutyl sebacate), DOA (dioctyl adipate), DINCH (diisononyl 1,2-cyclohexanedicarboxylate), TOP (trioctyl phosphate), TBP (tributyl phosphate), ether ester compounds, thioether plasticizers, petroleum plasticizers such as aromatic oils, naphthenic oils, lubricating oils, process oils, paraffin, liquid paraffin, vaseline, petroleum asphalt, etc. These can be used alone or in combination of two or more types.

The rubber composition according to one embodiment of the present invention can contain 5 to 50 parts by mass of plasticizer and softening agent, when rubber contained in the rubber composition is 100 parts by mass. The plasticizer and softening agent is, for example, 5, 10, 15, 20, 25, 30, 35, 40, 45, 50 parts by mass, and may be within the range between any two of the numerical values exemplified here.

### 1.8 Filler (Reinforcing material)

The rubber composition according to the present invention may contain a filler/reinforcing material.

Examples of the filler and reinforcing material include furnace carbon blacks such as SAF, ISAF, HAF, EPC, XCF, FEF, GPF, HMF, and SRF, modified carbon blacks such as hydrophilic carbon black, thermal carbon such as channel black, lamp black, FT, and MT, acetylene black, Ketjen Black, silica, clay, talc, and calcium carbonate. These can be used alone or in combination of two or more types. The rubber composition according to the present invention preferably contains silica from the viewpoint of improving hardness.

The rubber composition according to one embodiment of the present invention may contain 20 to 80 parts by mass, preferably contains 35 to 65 parts by mass of filler and reinforcing material (or silica), when rubber contained in the rubber composition is 100 parts by mass. The content of the filler and reinforcing material (or silica) is, for example, 20, 25, 30, 35, 40, 45, 50, 55, 60, 65, 70, 75, 80 parts by mass, and may be within the range between any two of the numerical values exemplified here.

The rubber composition according to one embodiment of the present invention can further improve the hardness of the vulcanizate and vulcanized molded object by containing the filler/reinforcing material, particularly silica at a content within the above numerical range.

### 1.9 Silane coupling agent

The rubber composition according to one embodiment of the present invention may contain a silane coupling agent.

The silane coupling agent is not particularly limited, and those used in commercially available rubber composition can be used, such as vinyl coupling agents, epoxy coupling agents, styryl coupling agents, methacrylic coupling agents, acrylic coupling agents, amino coupling agents, polysulfide coupling agents, mercapto coupling agents. In particular, from the viewpoint of scorch resistance and reinforcing effect, vinyl coupling agents, methacrylic coupling agents, and acrylic coupling agents for which the reaction is initiated under high temperature conditions during crosslinking are preferable.

Specifically, examples of the silane coupling agent include bis-(3-triethoxysilylpropyl)tetrasulfide, bis-(3-trimethoxysilypropyl)tetrasulfide, bis-(3-methyldimethoxysilylpropyl)tetrasulfide, bis-(2-triethoxysilylethyl)tetrasulfide, bis-(3-triethoxysilylpropyl)disulfide, bis-(3-trimethoxysilylpropyl)disulfide, bis-(3-triethoxysilylpropyl)trisulfide, 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, 3-mercaptopropyltrimethoxysilane, 3 -mercaptopropyltriethoxysilane, 3 -mercaptopropylmethyldimethoxysilane, 3-aminopropyltrimethoxysilane, 3-aminopropyltriethoxysilane, γ-glycidoxypropyltrimethoxysilane, γ-glycidoxypropylmethyldiethoxysilane, 3-trimethoxysilylpropyl-N,N-dimethylthiocarbamoyltetrasulfide, 3 -trimethoxysilylpropylbenzothiazolyltetrasulfide, 3-trimethoxysilylpropyl methacryloyl monosulfide, methyltrimethoxysilane, methyltriethoxysilane, dimethyldiethoxysilane, dimethyldimethoxysilane, trimethylethoxysilane, trimethylmethoxysilane, isobutyltrimethoxysilane, n-decyltrimethoxysilane, phenyltrimethoxysilane, phenyltriethoxysilane, diphenyldimethoxysilane, diphenyldiethoxysilane, hexyltrimethoxysilane, octadecylmethyldimethoxysilane, octadecyltrimethoxysilane, methyltrichlorosilane, dimethyldichlorosilane, triphenylchlorosilane, heptadecafluorodecylmethyldichlorosilane, heptadecafluorodecyltrichlorosilane, triethyllchlorosilane, and the like.

The rubber composition according to one embodiment of the present invention may contain 0.5 to 10 parts by mass of silane coupling agent, when rubber contained in the rubber composition is 100 parts by mass, and is for example, 0.5, 1, 2, 3, 4, 5, 6, 7, 8, 9, 10 parts by mass, and may be within the range between any two of the numerical values exemplified here.

By containing the above-mentioned silane coupling agent, and setting the content of the silane coupling agent within the above numerical range, the dispersibility of the silica filler in the rubber and the reinforcing effect between the rubber and epoxy compound and silica filler can be improved, and the occurrence of scorch can be suppressed.

### 1.10 Lubricant and Processing aid

The rubber composition according to the present invention may further contain a lubricant and/or processing aid. The lubricant and processing aid are mainly added to improve processing characteristics, such as making it easier for the rubber composition to peel off from rolls, molds, extruder screws, etc. Examples of the lubricant and processing aid include fatty acids such as stearic acid, paraffin processing aids such as polyethylene, fatty acid amides, vaseline, factice, and the like. These can be used alone or in combination of two or more types. The rubber composition according to the present invention can contain 1 to 15 parts by mass of lubricant and processing aid, and can also contain 1 to 10 parts by mass, when rubber contained in the rubber composition is 100 parts by mass. The content of the lubricant and processing aid is, for example, 1, 2, 3, 4, 5, 6, 7, 8, 9, 10, 11, 12, 13, 14, 15 parts by mass, and may be within the range between any two of the numerical values exemplified here.

### 1.11 Vulcanization accelerator

The rubber composition according to the present invention may contain a vulcanization accelerator, and may contain 0.3 to 5.0 parts by mass of vulcanization accelerator when rubber contained in the rubber composition is 100 parts by mass. The content of the vulcanization accelerator is, for example, 0.3, 0.5, 1.0, 1.5, 2.0, 2.5, 3.0, 3.5, 4.0, 4.5, 5.0 parts by mass, and may be within the range between any two of the numerical values exemplified here. Note that the rubber composition according to the present invention may not contain a vulcanization accelerator.

The type of vulcanization accelerator is not particularly limited as long as it does not impair the effects of the present invention. The vulcanization accelerator is preferably a vulcanization accelerator that can be used for vulcanization of chloroprene-based rubber. One or more vulcanization accelerators can be freely selected and used.

Examples of the vulcanization accelerator include thiuram-based, dithiocarbamate-based, thiourea-based, guanidine-based, xanthate-based, thiazole-based vulcanization accelerators, and the like.

Examples of the thiuram-based vulcanization accelerator include tetramethylthiuram disulfide (TMTD), tetraethylthiuram disulfide, tetrabutylthiuram disulfide, tetrakis(2-ethylhexyl) thiuram disulfide, tetramethylthiuram monosulfide, dipentamethylenethiuram tetrasulfide, and the like.

Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like.

Examples of the thiourea-based vulcanization accelerator include thiourea compounds such as ethylenethiourea, diethylthiourea (N,N'-diethylthiourea), trimethylthiourea, diphenylthiourea (N,N'-diphenylthiourea), 1,3-trimethylene-2-thiourea.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, and the like.

Examples of the xanthate-based vulcanization accelerator include zinc butylxanthate, zinc isopropylxanthate, and the like.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio) benzothiazole, N-cyclohexylbenzothiazole-2-sulfenamide, and the like.

These can be used alone or in combination of two or more types.

### 1.12 Others

In addition to the above-mentioned components, the rubber composition according to the present invention can further contain components such as an anti-aging agent, an antioxidant, and a flame retardant within a range that does not impede the effects of the present invention.

Examples of the anti-aging agent and antioxidant include anti-ozone aging agents, phenol-based anti-aging agents, amine-based anti-aging agents, acrylate-based anti-aging agents, imidazole-based anti-aging agents, metal carbamates, waxes, phosphorus anti-aging agents, sulfur anti-aging agent, etc. Examples of the imidazole-based anti-aging agent include 2-mercaptobenzimidazole, 2-mercaptomethylbenzimidazole, and zinc salt of 2-mercaptobenzimidazole.

The rubber composition according to the present invention can contain 0.1 to 10 parts by mass of anti-aging agent andantioxidant, when rubber contained in the rubber composition is 100 parts by mass.

### 2. Method for producing rubber composition

The rubber composition according to one embodiment of the present invention is obtained by kneading a chloroprene-based rubber, an epoxy compound, and other necessary components at a temperature not higher than the vulcanization temperature. Examples of the device for kneading the raw material components include kneading devices such as a conventionally known mixer, a Banbury mixer, a kneader mixer, and an open roll.

### 3. Characteristics of rubber composition

The rubber composition according to one embodiment of the present invention preferably has a scorch time of 7 minutes or more, more preferably 9 minutes or more, and even more preferably 11 minutes or more, as measured by the Mooney scorch test at 125°C in accordance with JIS K 6300-1.

The scorch time is, for example, 7, 8, 9, 10, 11, 12, 13, 14, 15, 16, 17, 18, 19, 20 minutes, and may be within the range between any two of the numerical values exemplified here.

As for the rubber composition according to one embodiment of the present invention, a vulcanizate, obtained by molding the rubber composition in accordance with JIS K6299, preferably has a Type A durometer hardness of 80 or more, more preferably 85 or more, and even more preferably 90 or more, as measured in accordance with JIS K6253. The Type A durometer hardness is, for example, 80, 85, 90, 95, 100, and may be within the range between any two of the numerical values exemplified here.

As for the rubber composition according to one embodiment of the present invention, a vulcanizate, obtained by molding the rubber composition in accordance with JIS K6299, preferably has a tensile strength of 21 MPa or more, more preferably 23 MPa or more, and even more preferably 25 MPa or more, as measured in accordance with JIS K 6251. The tensile strength is, for example, 21, 22, 23, 24, 25, 26, 27, 28, 29, 30 MPa, and may be within the range between any two of the numerical values exemplified here.

As for the rubber composition according to one embodiment of the present invention, a vulcanizate, obtained by vulcanizing the rubber composition in accordance with JIS K6299, preferably has a T10 of lower than -10°C, more preferably lower than -20°C, and even more preferably -30°C, as determined by Gehman torsion test in accordance with JIS K 6261. T10 is, for example, -40, -35, -30, -25, -20, -15, -10°C, and may be within the range between any two of the numerical values exemplified here.

### 4. Unvulcanized molded object, vulcanizate, and vulcanized molded object

The unvulcanized molded object according to this embodiment uses the rubber composition according to this embodiment, and is a molded object (molded product) of the rubber composition according to this embodiment (unvulcanized state). The method for producing the unvulcanized molded object according to this embodiment includes a step of molding the rubber composition according to this embodiment (unvulcanized state). The unvulcanized molded object according to this embodiment is made of the rubber composition according to this embodiment (unvulcanized state).

The vulcanizate according to this embodiment is a vulcanizate of the rubber composition according to this embodiment. The method for producing the vulcanizate according to this embodiment includes a step of vulcanizing the rubber composition according to this embodiment.

The vulcanized molded object according to this embodiment is a vulcanized molded object of the rubber composition according to this embodiment. The vulcanized molded object according to this embodiment uses the vulcanizate according to this embodiment, and is a molded object (molded product) of the vulcanizate according to this embodiment. The vulcanized molded object according to this embodiment is made of the vulcanizate according to this embodiment.

The vulcanized molded object according to this embodiment can be obtained by molding a vulcanizate obtained by vulcanizing the rubber composition according to this embodiment (unvulcanized state), and can also be obtained by vulcanizing a molded object obtained by molding the rubber composition according to this embodiment (unvulcanized state). The vulcanized molded object according to this embodiment can be obtained by vulcanizing the rubber composition according to this embodiment after or during molding. The method for producing the vulcanized molded object according to this embodiment includes a step of molding the vulcanizate according to this embodiment, or a step of vulcanizing the unvulcanized molded object according to this embodiment.

The unvulcanized molded object, vulcanizate, and vulcanized molded object according to this embodiment can be used as rubber parts in various industrial fields such as buildings, structures, ships, railways, coal mines, and automobiles. The rubber composition according to the present invention has a sufficiently long scorch time for the unvulcanized product, so it has excellent processability, and has a good balance among hardness, tensile strength, and freeze resistance for the vulcanizate, and thus can be used as various members that require these characteristics. The rubber composition according to one embodiment of the present invention can be used as rubber parts in various industrial fields such as buildings, structures, ships, railways, coal mines, and automobiles, and can be used as rubber parts such as rubber members for automobiles (for example, automobile sealing materials), hose materials, rubber molds, gaskets, rubber rolls, industrial cables, industrial conveyor belts, sponges. The rubber composition according to one embodiment of the present invention can be suitably used as a rubber roll, especially from the viewpoint of having high hardness.

### (Rubber members for automobiles)

Rubber members for automobiles include gaskets, oil seals, and packings, and are parts that prevent liquids and gases from leaking and dirt and foreign matter such as rainwater and dust from entering machines and equipment. Specifically, examples include gaskets used for fixing purpose, and oil seals and packings used in moving parts and movable parts. For gaskets whose sealing parts are fixed with bolts and the like, various materials are used depending on the purpose for soft gaskets such as O-rings and rubber sheets. In addition, packings are used in rotating parts such as the shafts of pumps and motors, movable parts of valves, reciprocating parts such as pistons, coupling parts of couplers, and water stop parts of water faucets, etc. The rubber composition of the present invention can improve the tensile strength and hardness of these members. As a result, it is possible to manufacture seals used in applications subject to high loads, which has been difficult with conventional rubber compositions.

### (Hose material)

A hose material is a bendable pipe, and specifically includes high/low pressure hoses for water supply, oil supply, air supply, steam, and hydraulic. The rubber composition of the present invention can improve the tensile strength of hose materials. As a result, it is possible to manufacture hose materials used in applications subject to high loads, which has been difficult with conventional rubber compositions.

### (Rubber mold)

Rubber molds include vibrationproof rubber, damping materials, boots, and the like. The vibrationproof rubber and damping materials are rubbers that prevent the transmission and spread of vibration, and specifically, include torsional dampers, engine mounts, muffler hangers, etc. that are used to absorb vibration and prevent noise when the engine is running for automobiles and other vehicles. The rubber composition of the present invention can improve the tensile strength of vibrationproof rubber and damping materials. As a result, it is possible to manufacture vibrationproof rubber and damping materials that can be used in applications subject to high loads, which has been difficult with conventional rubber compositions.

In addition, a boot is a bellows-shaped member whose outer diameter gradually increases from one end to the other, and specifically, examples thereof include boots for constant velocity joint covers, boots for ball joint covers (dust cover boots), boots for rack and pinion gears, etc. for protecting drive parts such as automobile drive systems. The rubber composition of the present invention can improve the tensile strength of boots. As a result, it is possible to manufacture boots for use in in applications subject to higher loads than conventional rubber compositions.

### (Gaskets, etc.)

Gaskets, oil seals, and packings are parts that prevent liquids and gases from leaking and dirt and foreign matter such as rainwater and dust from entering machines and equipment, and specifically, include gaskets used for fixing purpose, and oil seals and packings used in moving parts and movable parts. For gaskets whose sealing parts are fixed with bolts or the like, various materials are used depending on the purpose for soft gaskets such as O-rings and rubber sheets. In addition, packings are used in rotating parts such as the shafts of pumps and motors, movable parts of valves, reciprocating parts such as pistons, coupling parts of couplers, and water stop parts of water faucets, etc. The rubber composition of the present invention can improve the tensile strength and hardness of these members. As a result, it is possible to manufacture seals that can be used in applications subject to high loads, which has been difficult with conventional rubber compositions.

### (Rubber roll)

Rubber rolls are manufactured by adhesively covering a metal core such as an iron core with rubber, and are generally manufactured by spirally wrapping a rubber sheet around a metal iron core. Rubber materials such as NBR, EPDM, and CR are used for the rubber roll, depending on the characteristics required for various applications such as paper manufacturing, various metal manufacturing, film manufacturing, printing, general industry, agricultural machinery such as hulling, and food processing. CR has good mechanical strength that can withstand the friction of conveyed objects, so it is used in a wide range of rubber roll applications. On the other hand, rubber rolls used in environments where oil adheres, such as during the production of industrial materials and products for steel manufacturing and paper manufacturing, have insufficient oil resistance, and improvements are needed. In addition, when plating products such as gold, silver, nickel, chromium, and zinc, they may be exposed to acids or alkalis, and resistance to these is also require. Furthermore, there is a problem that rubber rolls for conveying heavy objects deform under load, and improvements are required. The rubber composition of the present invention can improve the tensile strength and hardness of rubber rolls. As a result, it is possible to manufacture rubber rolls that can be used under high tension, which has been difficult with conventional rubber compositions.

### (Industrial cable)

An industrial cable is a linear member for transmitting electricity or optical signals. Industrial cables are made by covering a good conductor such as copper or copper alloy or optical fiber with an insulating coating layer, and a wide variety of industrial cables are manufactured depending on their structure and installation location. The rubber composition of the present invention can improve the tensile strength of industrial cables. As a result, it is possible to manufacture industrial cables that can be used in applications subject to high loads, which has been difficult with conventional rubber compositions.

### (Industrial conveyor belt)

Industrial conveyor belts include belts made of rubber, resin, and metal, and are selected to suit a wide variety of uses. Among these, rubber conveyor belts are inexpensive and widely used, but when used in environments where there is a lot of friction and collision with conveyed objects, damage due to deterioration occurs. The rubber composition of the present invention can improve the tensile strength of industrial conveyor belts. As a result, it is possible to manufacture industrial conveyor belts that can be used under high load environments, which has been difficult with conventional rubber compositions.

### (Sponge)

Sponges are porous substances with countless fine pores inside, and are specifically used in vibrationproof members, sponge seal parts, wetsuits, shoes, or the like. The rubber composition of the present invention can improve the tensile strength of sponges. In addition, since chloroprene-based rubber is used, it is possible to improve the flame retardancy of sponges. As a result, it is possible to manufacture sponges used under high tension, and sponges that have excellent flame retardancy, which has been difficult with conventional rubber compositions. Furthermore, the hardness of the resulting sponge can be adjusted appropriately by adjusting the content of the foaming agent.

Examples of methods for molding the rubber composition (unvulcanized state) and vulcanizate according to this embodiment include press molding, extrusion molding, calendar molding, and the like. The temperature at which the rubber composition is vulcanized may be appropriately set according to the composition of the rubber composition, and may be 140 to 220°C, or 160 to 190°C. The vulcanization time for vulcanizing the rubber composition may be appropriately set depending on the composition of the rubber composition, the shape of the unvulcanized molded object, etc., and may be 10 to 60 minutes.

### Example

Hereinafter, the present invention will be explained in more detail based on Examples, but the present invention is not limited thereto.

### <Method for producing chloroprene-based rubber A-2>

In a polymerization vessel with an internal volume of 3 L equipped with a heating and cooling jacket and a stirrer, 24 parts by mass of chloroprene (monomer), 24 parts by mass of acrylonitrile (monomer), 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of sodium salt of β-naphthalenesulfbnic acid formalin condensate (manufactured by Kao Corporation) were added. Next, after adding 0.1 parts by mass of potassium persulfate as a polymerization initiator, emulsion polymerization was carried out at a polymerization temperature of 40°C under a nitrogen flow. The above-mentioned chloroprene was added in batches from 20 seconds after the start of polymerization, and the flow rate of batch addition was adjusted using a solenoid valve based on the change in heat value of the refrigerant during the 10 seconds after the start of polymerization, and the flow rate was readjusted every 10 seconds thereafter to continuously perform. When the polymerization rate with respect to the total amount of chloroprene and acrylonitrile reached 50%, 0.02 parts by mass of phenothiazine was added as a polymerization terminator to terminate the polymerization. Thereafter, unreacted monomers in the reaction solution were removed under reduced pressure to obtain chloroprene-based latex A-2 containing a chloroprene-acrylonitrile copolymer.

The above-mentioned polymerization rate [%] of the chloroprene-based latex was calculated from the dry mass after the chloroprene-based latex was air-dried. Specifically, it was calculated using the following formula (A). In the formula, "solid content concentration" is the concentration of solid content [% by mass] after heating 2 g of sampled chloroprene-based latex at 130°C and removing volatile components such as solvent (water), volatile chemicals, and raw materials. The "total amount charged" is the total amount [g] of raw materials, reagents, and solvent (water) charged into the polymerization vessel from the start of polymerization to a certain time. The "evaporation residue" is the mass [g] of chemicals that remain as a solid content together with the polymer without volatilizing under the condition of 130°C, among the chemicals and raw materials charged up to a certain time from the start of polymerization. The "amount of monomer charged" is the total amount [g] of the monomer initially charged into the polymerization vessel and the amount of monomer added in batches up to a certain time from the start of polymerization. Note that the "monomer" here is the total amount of chloroprene and acrylonitrile. Polymerization rate = {[(total amount charged × solid content concentration / 100) - evaporation residue] / amount of monomer charged} × 100

After adjusting the pH of the above-mentioned chloroprene-based latex A-2 to 7.0 using acetic acid or sodium hydroxide, the chloroprene-based latex was frozen and coagulated on a metal plate cooled to -20°C to break the emulsification, thereby obtaining a sheet. After washing this sheet with water, it was dried at 130°C for 15 minutes to obtain a solid chloroprene-based rubber A-2.

The above-mentioned chloroprene-based rubber was dissolved in THF to prepare a solution with a sample preparation concentration of 0.1% by mass, and then the weight average molecular weight (Mw), number average molecular weight (Mn), and molecular weight distribution (Mw/Mn) (standard polystyrene equivalent) of the chloroprene-based rubber were measured using a high-speed GPC device (TOSOH HLC-8320GPC: manufactured by Tosoh Corporation). At that time, using TSK guard column HHR-H as a pre-column, and using three HSKgelGMHHR-H as analytical columns, the sample pump pressure was set to 8.0 to 9.5 MPa, the flow rate was set to 1 mL/min, the sample was eluted at 40°C, and detected using a differential refractometer.

The elution time and molecular weight were obtained using a calibration curve created by measuring the following nine standard polystyrene samples with known molecular weights.
Mw=8.42×10⁶, 1.09×10⁶, 7.06×10⁵, 427×10⁵, 1.90×10⁵, 9.64×10⁴, 3.79×10⁴, 1.74×10⁴, 2.63×10³

The chloroprene-based rubber has a weight average molecular weight (Mw) of 473 × 10³ g/mol, a number average molecular weight (Mn) of 138×10³ g/mol, and a molecular weight distribution (Mw/Mn) of 3.4.

The content of the acrylonitrile monomer unit contained in the chloroprene-based rubber A-2 was calculated from the content of nitrogen atoms in the chloroprene-acrylonitrile copolymer rubber. Specifically, the content of nitrogen atoms in 100 mg of chloroprene-based rubber A-2 was measured using an elemental analyzer (Sumigraph 220F, manufactured by Sumika Chemical Analysis Service, Ltd.), and the content of the acrylonitrile monomer unit was calculated. The content of the acrylonitrile monomer unit was 10.0% by mass.

The above elemental analysis was performed as follows. The electric furnace temperature was set to 900°C for the reaction furnace and 600°C for the reduction furnace, the column temperature was set to 70°C, and the detector temperature was set to 100°C, oxygen was flowed at 0.2 mL/min as a combustion gas and helium was flowed at 80 mL/min as a carrier gas. A calibration curve was created using aspartic acid (10.52%), which has a known nitrogen content, as a reference material.

The content of the acrylonitrile monomer unit in the chloroprene-based rubber A-2 obtained by the above production method was 10.0% by mass.

### <Method for producing chloroprene-based rubber A-1, A-3 to A-5>

By changing the amount of acrylonitrile monomer added in the polymerization step, chloroprene-based rubber A-1 in which the content of acrylonitrile monomer unit contained in the chloroprene-based rubber was 5.0% by mass, chloroprene-based rubber A-3 in which the content of the acrylonitrile monomer unit was 15.0% by mass, chloroprene-based rubber A-4 in which the content of the acrylonitrile monomer unit was 20.0% by mass, and chloroprene-based rubber A-5 in which the content of the acrylonitrile monomer unit was 25.0% by mass were obtained.

### <Preparation of rubber composition>

Rubber compositions of Examples and Comparative Examples were obtained by mixing the components as shown in Tables 1 and 2 and kneading them with an 8-inch open roll.

The components used to obtain the rubber composition are as follows.

Chloroprene-based rubber:
·Chloroprene-based rubber A-1 (chloroprene-acrylonitrile copolymer AN (acrylonitrile monomer unit) amount 5% by mass),
·Chloroprene-based rubber A-2 (chloroprene-acrylonitrile copolymer AN amount 10% by mass),
·Chloroprene-based rubber A-3 (chloroprene-acrylonitrile copolymer AN amount 20% by mass),
·Chloroprene-based rubber A-4 (chloroprene-acrylonitrile copolymer AN amount 25% by mass),
·Chloroprene-based rubber A-5 (mercaptan-modified chloroprene rubber (a homopolymer of chloroprene), "S-40V" manufactured by Denka Company Limited) mentioned above.
   Reactive plasticizer: epoxy compound A (molecular weight 700), di(9,10-epoxystearyl) 4,5-epoxycyclohexane-1,2-dicarboxylate, New Japan Chemical Co., Ltd., SANSO CIZER E-PO
   Reactive plasticizer: epoxy compound B (molecular weight 370), condensate of bisphenol A and epichlorohydrin, JER-828 manufactured by Mitsubishi Chemical Corporation
   Reactive plasticizer: epoxy compound C (molecular weight 250), 3',4'-epoxycyclohexylmethyl 3,4-epoxycyclohexanecarboxylate, Daicel Corporation, CELLOXIDE 2021P
   Reactive plasticizer: epoxy compound D (molecular weight 125), 1-vinyl-3,4-epoxycyclohexane, Daicel Corporation, CELLOXIDE 2000
   Reactive plasticizer: epoxy compound E (molecular weight Mw ≧ 900), epoxy group-containing polybutadiene rubber, NIPPON SODA CO., LTD., JP-100
   Plasticizer: ether ester compound, ADK CIZER RS-700 manufactured by ADEKA Corporation
   Filler: Carbon Black (HAF), "Asahi # 70" manufactured by Asahi Carbon Co., Ltd.
   Filler: silica, Tosoh Silica Corporation, NipsilAQ
   Silane coupling agent: methacryloxypropyltrimethoxysilane, Shin-Etsu Chemical Co., Ltd., KBM-503
   Hydrotalcite: Chemical formula Mg_{4.3}Al₂(OH)_{12.6}CO₃·3.5H₂O, Kyowa Chemical Industry Co., Ltd., DHT-4A
   Processing aid: stearic acid: Stearic Acid 50S manufactured by New Japan Chemical Co., Ltd.
   Zinc oxide: Type 2 zinc oxide manufactured by Sakai Chemical Industry Co., Ltd.
   Organic peroxide: 1,4-bis[(t-butylperoxy)isopropyl]benzene, NOF CORPORATION, Perbutyl P
   Heat-resistant anti-aging agent: 4,4'-bis(α,α-dimethylbenzyl)diphenyl amine, Ouchi Shinko Chemical Industrial Co., Ltd., Nocrac CD
   Curing agent: carboxylic acid dihydrazide, Otsuka Chemical Co., Ltd., Isophthalic acid dihydrazide

Note that when 5 parts by mass of carboxylic acid dihydrazide was added to 100 parts by mass of epoxy compound B, the gelation time at 160°C was 28 minutes. In addition, it was confirmed that when 5 parts by mass of carboxylic acid dihydrazide was added to 100 parts by mass of epoxy compounds A to D used in Examples, it was cured within 40 minutes.

### <Evaluation of rubber composition (unvulcanized product) >

### (Scorch time)

A Mooney scorch test was conducted using an L-shaped rotor at a test temperature of 125°C in accordance with JIS K 6300-1. The time when the measured Mooney viscosity increased by 5M was defined as the scorch time. The obtained scorch time was evaluated using the following evaluation criteria.
A: 11 minutes or more
B: 9 minutes or more, and less than 11 minutes
C: 7 minutes or more, and less than 9 minutes
D: less than 7 minutes

### <Preparation of vulcanized molded object>

The obtained rubber composition was press-vulcanized at 160°C for 40 minutes in accordance with JIS K6299 to produce a sheet-like vulcanized molded object having a thickness of 2 mm.

### <Evaluation of vulcanized molded object>

The above-mentioned vulcanized molded object was evaluated as follows. The results are shown in Tables 1 and 2.

### (Tensile strength)

The above-mentioned sheet-like vulcanized molded object was molded into dumbbell-shaped No. 3 test pieces with a thickness of 2 mm in accordance with JIS K 6251, and five test pieces were prepared. Using a long-stroke tensile test system for vulcanized rubber manufactured by SHIMADZU CORPORATION, the tensile strength of each test piece was measured at a tensile speed of 500 mm/min. The obtained tensile strength was evaluated using the following evaluation criteria.
A: 25 MPa or more
B: 23 MPa or more, and less than 25 MPa
C: 21 MPa or more, and less than 23 MPa
D: less than 21 MPa

### (Hardness (Type A durometer))

The durometer hardness (type A) of the above-mentioned sheet-like vulcanized molded object as defined in JIS K 6253 was measured using an Asker rubber hardness meter type A (Kobunshi Keiki Co., Ltd.). The obtained hardness was evaluated using the following evaluation criteria (for details of durometer hardness measurement, see JIS K 6253-3).
A: 90 or more
B: 85 or more, and less than 90
C: 80 or more, and less than 85
D: less than 80

### (Freeze resistance)

A Gehman torsion test was conducted in accordance with JIS K 6261 to determine T10. The temperature (T10) at which the 180° torsional modulus becomes 10 times the 180° torsional modulus at room temperature was determined for the above-mentioned vulcanized molded object. The obtained T10 was evaluated based on the following criteria.
A: lower than -30°C
B: -30°C or higher, and lower than -20°C
C: -20°C or higher, and lower than -10°C
D: -10°C or higher

**[Table 1]**

| | | | | Unit | Examples | | | | | | | | | | |
|---|---|---|---|---|---|---|---|---|---|---|---|---|---|---|---|
| | | | | | 1 | 2 | 3 | 4 | 5 | 6 | 7 | 8 | 9 | 10 | 11 |
| | Chloropreie based rubber | A-2 | Chloroprene-acrylonitrile copolymer AN amount 10% | parts by mass | 100 | 100 | 100 | 100 | 100 | 100 | 100 | 100 | 100 | 100 | 100 |
| | | A-1 | Chloroprene-acrylonitrile copolymer AN amount 5% | parts by mass | - | - | - | - | - | - | - | - | - | - | - |
| | | A-3 | Chloroprene-acrylonitrile copolymer AN amount 20% | parts by mass | - | - | - | - | - | - | - | - | - | - | - |
| | | A-4 | Chloroprene-acrylonitrile copolymer AN amount 25% | parts by mass | - | - | - | - | - | - | - | - | - | - | - |
| | | A-5 | Chloroprene rubber AN amount 0% | parts by mass | - | - | - | - | - | - | - | - | - | - | - |
| | Reactive plasticizer | | Epoxy compound A molecular weight 700 | parts by mass | 10 | - | - | - | - | - | - | - | - | - | - |
| | | | Epoxy compound B molecular weight 370 | parts by mass | - | 10 | - | - | - | - | - | - | - | - | - |
| | | | Epoxy compound C molecular weight 250 | parts by mass | - | - | - | 5 | 10 | 20 | 10 | 10 | 10 | 10 | 10 |
| | | | Epoxy compound D molecular weight 125 | parts by mass | - | - | 10 | - | - | - | - | - | - | - | - |
| Compounding | | | Epoxy compound E molecular weight ≧900 | parts by mass | - | - | - | - | - | - | - | - | - | - | - |
| | Curing agent | | Carboxylic acid dihydrazide | parts by mass | - | - | - | - | - | - | - | - | - | 1.5 | 5 |
| | Vulcanizing agent | | Zinc oxide | parts by mass | 3 | 3 | 3 | 3 | 3 | 3 | 3 | 3 | 3 | 3 | 3 |
| | | | Organic peroxides | parts by mass | 1 | 1 | 1 | 1 | 1 | 1 | 1 | 1 | 1 | 1 | 1 |
| | Hydrotalcite | | | parts by mass | 4 | 4 | 4 | 4 | 4 | 4 | 4 | 4 | 4 | 4 | 4 |
| | Plasticizer | | Ether ester compound | parts by mass | - | - | - | - | - | - | - | - | - | - | - |
| | Filler | | Carbon Black | parts by mass | - | - | - | - | - | - | - | - | 50 | - | - |
| | | | Silica | parts by mass | 50 | 50 | 50 | 50 | 50 | 50 | 30 | 70 | - | 50 | 50 |
| | Silane coupling agent | | | parts by mass | 3 | 3 | 3 | 3 | 3 | 3 | 2 | 4 | - | 3 | 3 |
| | Processing aid | | Stearic acid | parts by mass | 0.5 | 0.5 | 0.5 | 0.5 | 0.5 | 0.5 | 0.5 | 0.5 | 0.5 | 0.5 | 0.5 |
| | Heat-resistant anti-aging agent | | | parts by mass | 3 | 3 | 3 | 3 | 3 | 3 | 3 | 3 | 3 | 3 | 3 |
| Evaluation | Unvulcanized product Scorch time t5 (ML at 125°C) | | | min | C | A | C | A | A | A | A | C | A | B | C |
| | Vulcanizate Hardness (durometer A) | | | | A | A | A | B | A | B | C | A | C | A | A |
| | Vulcanizate Tensile strength | | | [MPa] | A | A | A | A | A | B | C | B | C | A | A |
| | Vulcanizate Freeze resistance Gehman torsion testTlO | | | °C | B | B | B | B | B | B | B | B | B | B | B |

**[Table 2]**

| | | | | Unit | Examples | | | | | Comparative Examples | | | | |
|---|---|---|---|---|---|---|---|---|---|---|---|---|---|---|
| | | | | | 12 | 13 | 14 | 15 | 16 | 1 | 2 | 3 | 4 | 5 |
| | Chloroprene-based rubber | A-2 | Chloroprene-acrylonitrile copolymer AN amount 10% | parts by mass | 100 | 100 | - | - | - | 100 | 100 | 100 | 100 | - |
| | | A-1 | Chloroprene-acrylonitrile copolymer AN amount 5% | parts by mass | - | - | 100 | - | - | - | - | - | - | - |
| | | A-3 | Chloroprene-acrylonitrile copolymer AN amount 20% | parts by mass | - | - | - | 100 | - | - | - | - | - | - |
| | | A-4 | Chloroprene-acrylonitrile copolymer AN amount 25% | parts by mass | - | - | - | - | - | - | - | - | - | 100 |
| | | A-5 | Chloroprene rubber AN amount 0% | parts by mass | - | - | - | - | 100 | - | - | - | - | - |
| | Reactive plasticizer | | Epoxy compound A molecular weight 700 | parts by mass | - | - | - | - | - | - | - | - | - | - |
| | | | Epoxy compound B molecular weight 370 | parts by mass | - | - | - | - | - | - | - | - | - | - |
| | | | Epoxy compound C molecular weight 250 | parts by mass | 10 | 5 | 10 | 10 | 10 | - | - | 30 | - | 10 |
| Compounding | | | Epoxy compound D molecular weight 125 | parts by mass | - | - | - | - | - | - | - | - | - | - |
| | | | Epoxy compound E molecular weight ≧900 | parts by mass | - | - | - | - | - | - | - | - | 10 | - |
| | Curing agent | | Carboxylic acid di hydrazide | parts by mass | - | - | - | - | - | - | - | - | - | - |
| | Vulcanizing agent | | Zinc oxide | parts by mass | 3 | 3 | 3 | 3 | 3 | 3 | 3 | 3 | 3 | 3 |
| | | | Organic peroxides | parts by mass | 1 | 1 | 1 | 1 | 1 | 1 | 1 | 1 | 1 | 1 |
| | Plasticizer | | Ether ester compound | parts by mass | 5 | 5 | - | - | - | - | 10 | - | - | - |
| | Hydrotalcite | | | parts by mass | 4 | 4 | 4 | 4 | 4 | 4 | 4 | 4 | 4 | 4 |
| | Filler | | Carbon Black | parts by mass | - | - | - | - | - | - | - | - | - | - |
| | | | Silica | parts by mass | 50 | 50 | 50 | 50 | 50 | 50 | 50 | 50 | 50 | 50 |
| | Silane coupling agent | | | parts by mass | 3 | 3 | 3 | 3 | 3 | 3 | 3 | 3 | 3 | 3 |
| | Processing aid | | Stearic acid | parts by mass | 0.5 | 0.5 | 0.5 | 0.5 | 0.5 | 0.5 | 0.5 | 0.5 | 0.5 | 0.5 |
| | Heat-resistant anti-aging agent | | | parts by mass | 3 | 3 | 3 | 3 | 3 | 3 | 3 | 3 | 3 | 3 |
| Evaluation | Unvulcanized product Scorch time t5 (MLat 125°C) | | | min | A | A | A | A | A | D | A | B | D | B |
| | Vulcanizate Hardness (durometer A) | | | | C | C | A | A | B | C | D | D | A | B |
| | Vulcanizate Tensile strength | | | [MPa] | B | B | B | A | C | C | C | D | B | B |
| | Vulcanizate Freeze resistance Gehman torsion test T10 | | | °C | B | B | A | C | A | C | B | B | B | D |

## Claims

1. A rubber composition comprising a chloroprene-based rubber having a content of an unsaturated nitrile monomer unit of less than 25% by mass and an epoxy compound having a weight average molecular weight more than 100 and less than 900, wherein
the rubber composition comprises 0.1 to 25 parts by mass of the epoxy compound with respect to 100 parts by mass of the chloroprene-based rubber composition.

2. The rubber composition of Claim 1, wherein
the unsaturated nitrile monomer is acrylonitrile.

3. The rubber composition of Claim 1 or 2, wherein
the epoxy compound is at least one epoxy compound selected from an alicyclic epoxy compound, an epoxy resin comprising a copolymer of epichlorohydrin and bisphenol, and an epoxidized unsaturated fatty acid ester.

4. The rubber composition of Claim 1 or 2, wherein
the rubber composition comprises 20 to 80 parts by mass of a filler with respect to 100 parts by mass of the chloroprene-based rubber.

5. The rubber composition of Claim 1 or 2, wherein
the rubber composition comprises 5 parts by mass or more of a curing agent with respect to 100 parts by mass of the epoxy compound.

6. The rubber composition of Claim 1 or 2, wherein
a vulcanizate, obtained by molding the rubber composition in accordance with JIS K6299, has a Type A durometer hardness of 80 or more as measured in accordance with JIS K6253.

7. A vulcanizate of the rubber composition of Claim 1 or 2.

8. A vulcanized molded object using the vulcanizate of Claim 7.
